# EUROPEAN PATENT APPLICATION

(11) **EP 4 711 912 A1**
(43) Date of publication of application: **18.03.2026**
(21) Application number: 24860242.7
(22) Date of filing: 07.08.2024
(51) Int. Cl.: G06F 3/14, H04W 4/80, G06F 3/00

(54) **TERMINAL DEVICE FOR CONTROLLING EXTERNAL DEVICE, AND DEVICE CONTROL METHOD THEREFOR**

(30) Priority: 01.09.2023 KR 20230116494
(71) Applicant: Samsung Electronics Co., Ltd., Suwon-si, Gyeonggi-do 16677 (KR)
(72) Inventor: KIM, Hyuntae, Suwon-si Gyeonggi-do 16677 (KR); WON, Donghee, Suwon-si Gyeonggi-do 16677 (KR); SON, Sungdo, Suwon-si Gyeonggi-do 16677 (KR); YOU, Soyon, Suwon-si Gyeonggi-do 16677 (KR); YOON, Sooyeoun, Suwon-si Gyeonggi-do 16677 (KR); LEE, Dongho, Suwon-si Gyeonggi-do 16677 (KR); CHOI, Nakwon, Suwon-si Gyeonggi-do 16677 (KR); WHANG, Soohyun, Suwon-si Gyeonggi-do 16677 (KR)
(74) Representative: Appleyard Lees IP LLP
(86) International application number: PCT/KR2024/011739
(87) International publication number: WO 2025/048321

(57) **Abstract**

A terminal apparatus that controls an external apparatus is provided. A processor of the apparatus is configured to control the display to display a video call screen with a correspondent device that performs a mirroring operation for sharing a screen of an external apparatus, and based on a user manipulation for controlling the external apparatus being input, generate a control signal for the external apparatus, and transmit the control signal to the correspondent device through a communicator.

## Description

### [Technical Field]

The present disclosure relates to a terminal apparatus for controlling an external apparatus and a controlling method thereof.

### [Background Art]

Recently, with the development of electronic technologies, various electronic apparatuses have been developed. In particular, electronic apparatuses that support various services such as video call services and mirroring services have been developed in recent days. A video call service refers to a service that allows multiple users to see each other's faces and communicate through their respective terminal apparatuses. A mirroring service refers to a service in which an image being displayed on a display of an electronic apparatus is identically displayed on a display of another electronic apparatus.

The mirroring service is also referred to as a screen sharing function. Through a mirroring service, a user can share an image being displayed on a display of an electronic apparatus, such as a laptop, tablet, or mobile device, through a display of a display apparatus, such as a television or monitor.

As various services such as the above are being provided, a need has arisen for methods that allow these services to be used in more diverse and convenient ways.

### [Disclosure of Invention]

### [Solution to Problem]

A display apparatus according to an embodiment includes a communicator, a display, and a processor.

The processor is configured to control the display to display a video call screen with a correspondent device that performs a mirroring operation for sharing a screen of an external apparatus, and based on a user manipulation for controlling the external apparatus being input, generate a control signal for the external apparatus, and transmit the control signal to the correspondent device through the communicator such that the correspondent device transmits the control signal to the external apparatus.

A mobile device according to an embodiment includes a communicator configured to perform communication with an external apparatus, a display, and a processor.

The processor is configured to, based on a mirroring function for a second external apparatus that is performing a video call with a first external apparatus being performed, provide a screen of the display to the second external apparatus through the communicator, and based on control authority over the terminal apparatus being granted to the first external apparatus, permit control by the first external apparatus in a limited manner.

A server device according to an embodiment includes a communicator configured to perform communication with a plurality of terminal apparatuses, memory, and a processor.

The processor is configured to, based on a video call being performed among the plurality of terminal apparatuses, generate a video call screen including an image provided by each terminal apparatus and transmit the video call screen to each terminal apparatus through the communicator, based on a mirroring operation for sharing a screen of an external apparatus being performed in at least one terminal apparatus among the plurality of terminal apparatuses, receive information about a screen of the external apparatus from the at least one terminal apparatus through the communicator and store the information in the memory, reconfigure the video call screen to add the stored screen of the external apparatus, and transmit the reconfigured video call screen to each terminal apparatus through the communicator, and based on a user manipulation for controlling the external apparatus being transmitted from one of the plurality of terminal apparatuses, generate a control signal for performing an operation corresponding to the user manipulation by the external apparatus, and transmit the control signal to a terminal apparatus that is mirrored with the external apparatus through the communicator.

A method of controlling a terminal apparatus according to an embodiment includes displaying a video call screen with a correspondent device that performs a mirroring operation for sharing a screen of an external apparatus.

The method includes, based on a user manipulation for controlling the external apparatus being input, generating a control signal corresponding to the user manipulation, and transmitting the control signal to the correspondent device such that the correspondent device transmits the control signal to the external apparatus.

According to an embodiment, a computer-readable recording media storing a computer instruction that causes a terminal apparatus to control an external apparatus is provided. The computer program may sequentially perform operations of displaying a video call screen with a correspondent device that performs a mirroring operation for sharing a screen of an external apparatus, based on a user manipulation for controlling the external apparatus being input, generating a control signal corresponding to the user manipulation, and transmitting the control signal to the correspondent device such that the correspondent device transmits the control signal to the external apparatus.

### [Brief Description of Drawings]

FIG. 1 is a view provided to explain a terminal apparatus that controls an external apparatus according to an embodiment;
FIG. 2 is a block diagram illustrating configuration of a terminal apparatus according to an embodiment;
FIG. 3 is a view provided to explain a process of sharing a screen of a terminal apparatus according to various embodiments;
FIGS. 4 to 7 are views provided to explain a user manipulation of a terminal apparatus according to various embodiments;
FIG. 8 is a flowchart provided to explain an example of a terminal apparatus operation in a state in which a plurality of apparatuses are connected;
FIG. 9 is a view provided to explain a server device that controls an external apparatus according to an embodiment;
FIG. 10 is a block diagram illustrating configuration of a server device according to an embodiment;
FIG. 11 is a block diagram illustrating configuration of a mobile device according to an embodiment;
FIG. 12 is a flowchart provided to explain a method of controlling a terminal apparatus according to an embodiment; and
FIG. 13 is a flowchart provided to explain an example of a method of controlling an apparatus in a state in which a plurality of apparatuses are connected with each other.

### [Mode for Invention]

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

An expression, "at least one of A or/and B" should be understood as indicating any one of "A", "B" and "both of A and B."

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor (not shown) except for a 'module' or a 'unit' that needs to be implemented by specific hardware.

In this specification, a term 'user' may refer to a person who uses an electronic apparatus, or to an apparatus being used by such a person.

Hereinafter, an embodiment of the present disclosure will be described in greater detail with reference to the accompanying drawings.

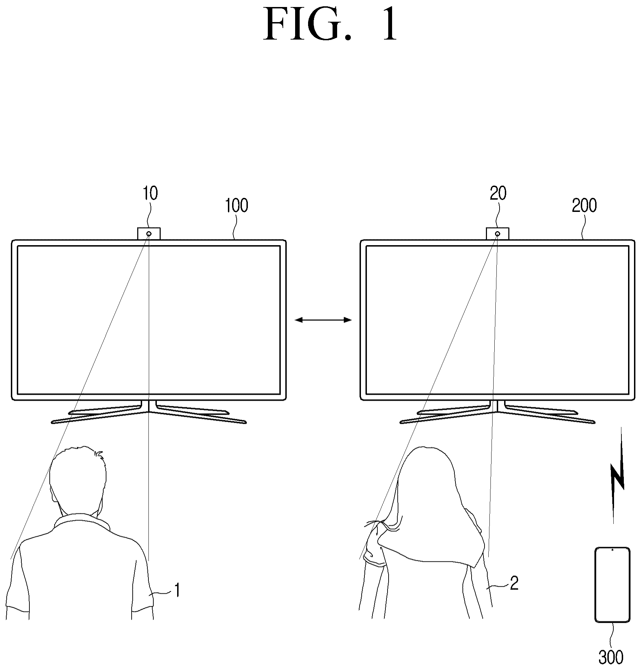

FIG. 1 is a view provided to explain a terminal apparatus that controls an external apparatus according to an embodiment.

Referring to FIG. 1, a terminal apparatus 100 may be implemented as a TV including a display, but is not limited thereto, and may be applied to any device having a display function, such as a video wall, a large format display (LFD), digital signage, a digital information display (DID), or a projector display. In addition, the terminal apparatus 100 may include various types of displays such as a liquid crystal display (LCD), an organic light-emitting diode (OLED), a liquid crystal on silicon (LCoS), a digital light processing (DLP), a quantum dot (QD) display panel, or quantum dot light-emitting diodes (QLED). However, the terminal apparatus 100 is not limited thereto, and may be implemented as various types of output devices.

Further, the terminal apparatus 100 may also be implemented as a user terminal apparatus or an audio output device (e.g., a sound bar, a home theater system, a room speaker, a headphone, an earphone, etc.).

As described above, the terminal apparatus 100 according to an embodiment may be implemented in various forms, and depending on its form, the terminal apparatus 100 may provide various services such as content display on its own. In addition, the terminal apparatus 100 may provide services that interact with other terminal apparatuses. For example, the terminal apparatus 100 may provide a video call service, a video conferencing service, a general chat service, or a video chat service.

FIG. 1 illustrates a state in which a user 1 performs a video call with another user 2 using the terminal apparatus 100. For convenience of explanation, an apparatus used by the another user 2 is referred to as a correspondent device 200. For example, when the user 1 and the counterpart 2 engage in a video call, the terminal apparatus 100 transmits an image of the user 1 captured by an embedded or connected camera 10 and a voice input through a microphone (not shown) to the correspondent device 200. The correspondent device 200 also provides an image of the counterpart 2 captured by a camera 20 and the corresponding voice to the terminal apparatus 100. Such a video call service may be performed through a separate relay server (not shown) or via a direct connection between terminal apparatuses. The present disclosure is not limited thereto.

The user 1 and the counterpart 2 may share not only images capturing each person but also documents, images, and other files stored in each device 100, 200, and it is possible to connect another device in a mirroring method to view the screen of the corresponding device together.

FIG. 1 illustrates a state in which the counterpart 2 performs a mirroring operation of a screen of another terminal apparatus 300 with the correspondent device 200. For convenience of explanation, the another terminal apparatus is hereinafter referred to as an external apparatus 300. In FIG. 1, the terminal apparatus 100 and the correspondent device 200 are illustrated as TVs, and the external apparatus 300 is illustrated as a mobile phone; however, each of the apparatuses may be implemented in various forms.

As shown in FIG. 1, when the counterpart 2 activates the mirroring function to allow the screen of the external apparatus 300 to be shared with the correspondent device 200, the shared screen content can also be displayed on the terminal apparatus 100 of the user 1, who is in a video call with the counterpart 2.

The user 1 may view the screen of the external apparatus 300 together with the counterpart 2, and if necessary, the user 1 may directly control the screen.

When the user 1 inputs a user manipulation to control the external apparatus, the terminal apparatus 100 generates a control signal corresponding to the user manipulation. For example, the terminal apparatus 100 may generate a control signal to enlarge a specific piece of content displayed on the screen of the external apparatus 300, or to select and execute a specific application icon.

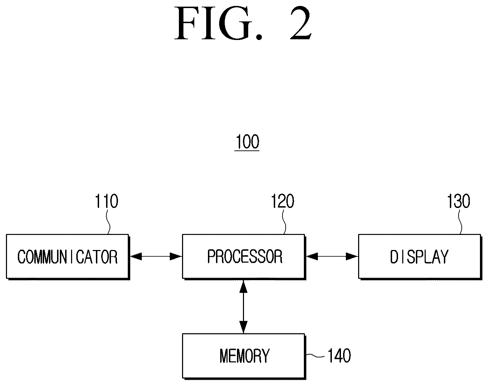

The terminal apparatus 100 transmits the generated control signal to the correspondent device 200, and the correspondent device 200 forwards it to the control apparatus 300. The external apparatus 300 performs an operation corresponding to the received control signal. FIG. 2 is a block diagram illustrating configuration of a terminal apparatus according to an embodiment.

Referring to FIG. 2, the terminal apparatus 100 includes a communicator 110, a processor 120, a display 130, and memory 140.

The communicator 110 may include various wired or wireless input/output interfaces (or I/O terminals) according to different standards. For example, the communicator 110 may include various interfaces such as High Definition Multimedia Interface (HDMI), Mobile High-Definition Link (MHL), Universal Serial Bus (USB), DisplayPort (DP), Thunderbolt, Video Graphics Array (VGA) port, Red Green Blue (RGB) port, D-subminiature (D-SUB), Digital Visual Interface (DVI), a Wi-Fi (Wireless LAN network) based on an access point (AP), Bluetooth, Zigbee, wired/wireless Local Area Network (LAN), Wide Area Network (WAN), Ethernet, IEEE 1394, Audio Engineering Society/European Broadcasting Union (AES/EBU), Optical, Coaxial, etc.

When the processor 120 executes a video call function with the correspondent device 200, the communicator 110 may receive image, voice, and other data provided by the correspondent device 200, and transmit image, voice, and other data generated by the terminal apparatus 100 to the correspondent device 200.

Alternatively, when the processor 120 executes a mirroring function for a separate external apparatus, the communicator 110 may receive data of a screen of the external apparatus, or transmit data of a screen displayed on the display 130 of the terminal apparatus 100 to the external apparatus.

The display 130 is configured to display various types of screens. For example, when the processor 120 executes a video call function with the correspondent device 200, the display 130 may display a video call screen. The display 130 may be implemented as various types of displays such as liquid crystal display (LCD), organic light-emitting diode (OLED), liquid crystal on silicon (LCoS), digital light processing (DLP), quantum dot (QD) display panel, quantum dot light-emitting diodes (QLED), micro light-emitting diodes (µLED), and mini LED. Meanwhile, the display 130 may also be implemented as a touch screen combined with a touch sensor, a flexible display, a rollable display, a three-dimensional (3D) display, or a display in which a plurality of display modules are physically connected.

The memory 140 is configured to store various data and programs necessary for operating the terminal apparatus. The memory 140 may be implemented as volatile memories such as Static Random Access Memory (S-RAM) and Dynamic Random Access Memory (D-RAM), non-volatile memories such as Flash Memory, Read Only Memory (ROM), Erasable Programmable Read Only Memory (EPROM), Electrically Erasable Programmable Read Only Memory (EEPROM), or as a hard disk drive (HDD) or a solid state drive (SSD).

The memory 140 may be accessed by the processor 120. The processor 120 may perform operations such as reading, writing, modifying, deleting, and updating data in the memory 140. FIG. 2 illustrates a state in which the memory 140 includes only one processor 120 separately; however, according to an embodiment, the memory 140 may be implemented in multiple units, and among them, memories such as ROM or RAM may be mounted within the processor 120.

The processor 120 is configured to control an operation of the terminal apparatus 100. The processor 120 may be implemented as a digital signal processor (DSP), a microprocessor, or a timing controller (TCON) that processes digital signals. However, the present disclosure is not limited thereto, and the processor 120 may include, or be defined as, one or more of a central processing unit (CPU), a micro controller unit (MCU), a micro processing unit (MPU), a controller, an application processor (AP), a communication processor (CP), an ARM processor, and an artificial intelligence (AI) processor. In addition, the processor 120 may also be implemented as a system on chip (SoC) or a large scale integration (LSI) with a built-in processing algorithm, or may be implemented in the form of a field programmable gate array (FPGA). The processor 120 may perform various functions by executing computer executable instructions stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The processor 120 may be implemented as a single core processor including a single core, or as one or more multicore processors including a plurality of cores (e.g., homogeneous multicore or heterogeneous multicore). When the processor 120 is implemented as a multicore processor, each of the plurality of cores included in the multicore processor may include internal memory of the processor, such as cache memory and an on-chip memory, and a common cache shared by the plurality of cores may be included in the multicore processor. Each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

The processor 120 performs an operation corresponding to a user manipulation received through the terminal apparatus 100.

When the user selects an application to perform a video call function, the processor 120 executes the application and displays the execution screen on the display 130. The user may input various identification information such as the name, phone number, ID, email address, or messenger ID of the call counterpart on the execution screen. The processor 120 searches for the correspondent device based on the input identification information, and when the correspondent device 200 corresponding to the identification information is found, the processor 120 transmits a request for establishing a video call connection to the correspondent device 200. Upon receiving the request, the correspondent device 200 automatically executes the video call application and waits for the user's response. If the user, i.e., the counterpart 2, accepts the video call, the correspondent device 200 transmits a response signal to the request. When the processor 120 receives the response signal through the communicator 110, the processor 120 controls the communicator 110 to connect the video call session with the correspondent device 200. The processor 120 activates a camera and a microphone embedded in or connected to the terminal apparatus 100, composes a video call screen including the image of the user 1, and displays it on the display 130, while also controlling the communicator 110 to transmit the user's image and voice to the correspondent device 200. When image and voice of the counterpart 1 are transmitted from the correspondent device 200 through the video call session, the processor 120 additionally displays them on the video call screen. According to an embodiment, the video call function may be performed by a mechanism different from the above, and the various embodiments of the present disclosure are not limited to any single mechanism.

While the video call is performed in this manner, if the correspondent device 200 executes a mirroring function that shares the screen of the external apparatus 300, the screen of the external apparatus 300 is shared on the display screen of the correspondent device 200. The correspondent device 200 transmits information about the screen of the external apparatus 300 shared by the mirroring function to the terminal apparatus 100.

When the information about the screen of the external apparatus 300 is received through the communicator 110, the processor 120 stores the information in the memory 140.

The processor 120 controls the display 130 to add and display the received external apparatus screen to the video call screen.

The user 1 may check not only the image of the counterpart 2 but also the screen of the external apparatus 300 separately used by the counterpart 2 on the video call screen. In this case, a situation may occur where the user 1 wants to directly control the external apparatus 300.

For example, when the user 1 wants to explain how to use the external apparatus 300 to the counterpart 2, it may be more convenient to control the external apparatus 300 directly while explaining to the counterpart 2. Also, if the counterpart 2 is a pet or an elderly person with weak cognitive ability, the user 1 may control the operation of the external apparatus 300 placed at a position where the counterpart 2 is located to perform various functions such as making an emergency call or playing content.

In this case, the user may input a user manipulation for controlling the external apparatus. The user manipulation may be input in various forms depending on the type and features of the terminal apparatus 100. This will be described in detail in the following sections.

When such a user manipulation is input, the processor 120 generates a control signal to cause the external apparatus 300 to perform an operation corresponding to the user manipulation. The processor 120 generates a control signal corresponding to the user manipulation and transmits it to the correspondent device 200 through the communicator 110 such that the correspondent device 200 transmits it to the external apparatus 300.

Specifically, when the user 1 inputs a user manipulation for controlling the external apparatus 300 through the terminal apparatus 100, the processor 120 transmits, through the communicator 110, a message inquiring about the permission for control of the external apparatus 300 to the correspondent device 200, such that the correspondent device 200 displays the message on its own display.

The correspondent device 200 displays the received message, and the counterpart 2 may select whether to permit control in response to the message. When the counterpart 2 selects to permit control of the external apparatus 300, the correspondent device 200 transmits a response regarding the control permission.

When receiving a response signal indicating that control is not permitted, the processor 120 controls the display 130 to display a message indicating that control is not allowed.

On the other hand, when the processor 120 receives a response signal permitting control, the processor 120 may secure control authority over the external apparatus 300. When a user manipulation is input while the control authority is secured, the processor 120 may generate a control signal causing the external apparatus 300 to perform an operation corresponding to the user manipulation. The control signal may be generated in different formats depending on the type of the external apparatus 300. For example, when the external apparatus 300 includes a touch screen on which a plurality of icons are displayed, and the processor of the external apparatus 300 identifies that one of the icons is selected, it may be implemented that an application corresponding to the icon is executed, a control operation such as playing content is performed. In this case, the processor 120 may generate a control signal including a control code or an interaction indicating that the user has selected a specific icon within the screen currently displayed on the external apparatus 300. Alternatively, the processor 120 may generate a control signal including information about coordinates of a touch or a selected point within the screen currently displayed on the external apparatus 300. Alternatively, when the external apparatus 300 and the terminal apparatus 100 are products of the same manufacturer or use the same signaling system, he processor 120 may identically generate a control signal corresponding to a command for executing a specific application or playing content, in the same manner as a control command directly generated by the processor of the external apparatus 300. The processor 120 may set a flag or add an indicator corresponding to the external apparatus 300 in a header portion of the control signal, such that the correspondent device 200 transmits the received control signal to the external apparatus 300. Meanwhile, the above-described method of generating and transmitting a control signal is merely an example and is not limited thereto.

Meanwhile, in the terminal apparatus 100 controlling the external apparatus 300, the processor 120 may transmit image and voice not directly to the correspondent device 200 through the communicator 110, but by using an external server. The communicator 110 may receive data of the video call screen including video captured by the camera 10 of the terminal apparatus 100, video captured by the correspondent device 200, and the screen of the external apparatus 300 from the external server.

The processor 120 controls the display 130 to display the video call screen based on the received data. Subsequently, when a user manipulation for controlling the external apparatus 300 is input on the video call screen, the processor 120 generates a control signal corresponding to the user manipulation and transmits the control signal to the correspondent device 200 through the communicator 110.

Hereinafter, the process of sharing the video call screen between the terminal apparatus 100 and the correspondent device 200 will be described in detail.

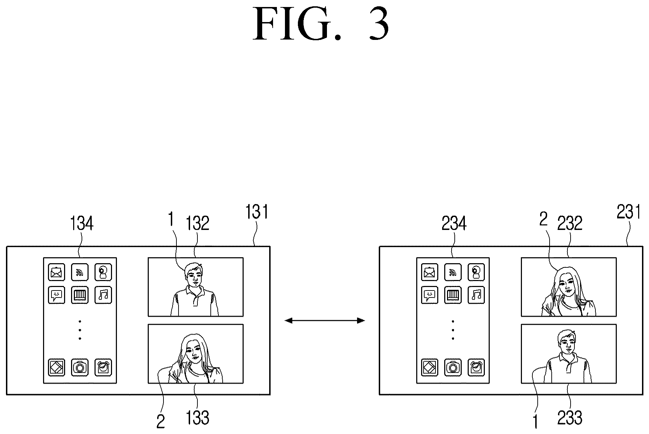

FIG. 3 is a view provided to explain a process of sharing a screen of a terminal apparatus according to various embodiments.

Referring to FIG. 3, when the terminal apparatus 100 and the correspondent device 200 are conducting a video call, and the correspondent device 200 and the external apparatus 300 are performing mirroring communication, a display screen 131 of the terminal apparatus 100 and a display screen 231 of the correspondent device 200 appear as illustrated.

The processor 120 controls the display 130 to display, within the video call screen 131, all of the video captured by a camera built in or connected to the terminal apparatus 100, the video received from the correspondent device, and the screen of the external apparatus. In the present disclosure, the areas in which the captured video, the video of the correspondent device, and the screen of the external apparatus are displayed are respectively referred to as a first area, a second area, and a third area. The processor 120 may display the captured video, the external apparatus screen, and the correspondent device video in each of the areas within the video call screen 131, based on layout information stored in the memory 140.

Meanwhile, the size of the third area in which the external apparatus screen is displayed may be the same as the actual screen size of the external apparatus 300. However, if the display 130 of the terminal apparatus 100 is much larger, the processor 120 may scale up the screen of the external apparatus 300 and display it in the third area. In this case, the aspect ratio may be maintained as it is, but it is not necessarily limited thereto.

Referring to FIG. 3, the image of the user 1 is disposed in an upper-right first area 132 of the display screen 131 of the terminal apparatus, and the image of the counterpart 2 is disposed in a lower-right second area 133. The screen of the external apparatus is disposed in a third area 134 on the left.

In the display screen 231 of the correspondent device, the video call screen of the counterpart 2 is disposed in a first area 232, the video call screen of the user 1 is disposed in a second area 233 below it, and the display screen of the external apparatus 300, which is performing mirroring communication with the correspondent device 200, is disposed in a third area 234 on the left. The positions of the disposed screens are not limited thereto, and may be disposed in other positions. Meanwhile, among the disposed screens, the video call video of the user or the counterpart (132, 232) may be selectively displayed on the display screen. When the user sets his or her image not to be shown, or the counterpart sets his or her image not to be shown, the processor 120 may control the display 130 to display the video call screen excluding the user's own image or the counterpart's own image, based on that setting state.

In addition, although FIG. 3 illustrates that the screen of the external apparatus is displayed in the third area 134, 234 on the left in consideration of the aspect ratio of a mobile phone screen, when the type of the external apparatus changes and the aspect ratio changes, the processor 120 may dispose each image in a layout corresponding thereto.

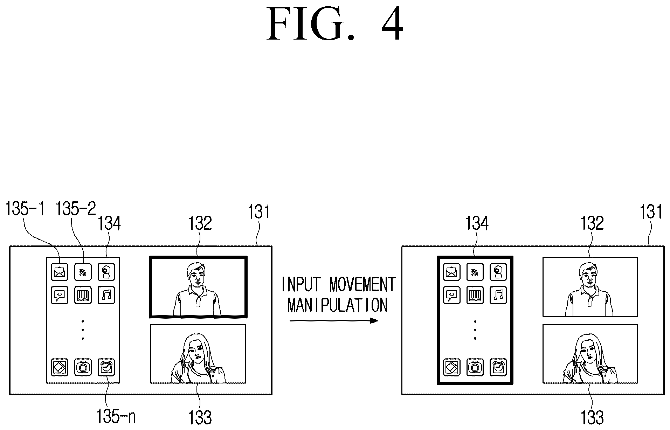

FIGS. 4 to 7 are views provided to explain a user manipulation of a terminal apparatus according to various embodiments.

Referring to FIG. 4, the processor 120 controls the display to add a highlight indicator to the video call screen 131 in which each of the images is disposed by area.

Specifically, the processor 120 may add a highlight indicator at the edge portion of at least one of the first to third areas (132, 133, 134). The highlight indicator includes graphic processing for making the corresponding area identifiable compared to other areas. For example, various graphic processes may be used, such as displaying a thick border around the edge of a certain area, setting the edge color differently from the edge colors of other areas, turning on a brightly colored graphic object, changing the entire color of the corresponding area, turning on the entire corresponding area, or displaying other areas in an opaque state. FIGS. 4 to 6 illustrate a case in which a thick border is used. For convenience of explanation, the present disclosure refers to the above as the highlight indicator; however, it may alternatively be referred to as a selection area indicator, an emphasis indicator, etc.

The user may identify the currently selected area by checking the highlight indicator. Referring to the left view of FIG. 4, it shows a state where the highlight indicator is added to the first area 132. In this state, when the user inputs a movement manipulation using a device capable of left/right or up/down navigation, the highlight indicator moves from the currently highlighted area to another area. FIG. 4 illustrates a state in which the highlight indicator has moved to the third area 134. In this state, when the user inputs a selection command, the processor 120 may recognize that a user manipulation for obtaining control authority of the external apparatus 300 is input.

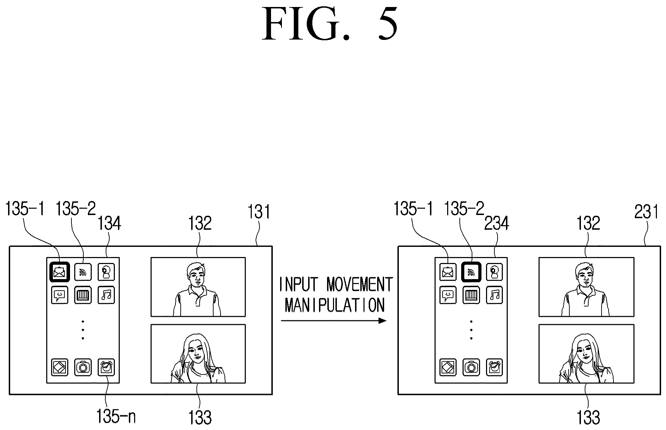

Meanwhile, when the external apparatus 300 provides a screen including a plurality of objects (e.g., icons, thumbnails, text, images, etc.), the user may directly select one of those objects within the third area on the video call screen. FIG. 5 illustrates this process.

As described with reference to FIG. 4, when the user inputs a selection command in a state where the highlight indicator has moved to the third area 134, the processor 120 displays a state in which the highlight indicator has moved to one of the objects 135-1 among objects (135-1 to 135-n) displayed on the external apparatus screen within the third area 134. In that state, when the user again inputs a movement manipulation using a device capable of left-right/up-down navigation, the processor 120 controls the display 130 to move the highlight indicator to the next object 135-2. In such a state, when a selection command is input again, the processor 120 generates a control signal for performing an operation corresponding to the object 135-2 at which the highlight indicator is located, and transmits the control signal to the correspondent device 200 through the communicator 110.

Upon receiving the control signal, the correspondent device transmits the control signal to the external apparatus 300. The external apparatus 300 performs an operation corresponding to the object selected by the user based on the control signal. Specifically, when the user selects a web-browser icon, the external apparatus 300 executes the web browser and displays a web page set as default. Alternatively, when the user selects an icon for music playback or an icon for checking photo content, the external apparatus 300 may execute an operation such as playing the music or displaying the photo content.

The above-described movement manipulation and selection command may be input through various input devices, such as a remote controller for controlling the terminal apparatus, a mobile phone that performs communication with the terminal apparatus, buttons or a touch screen provided on the terminal apparatus itself, etc.

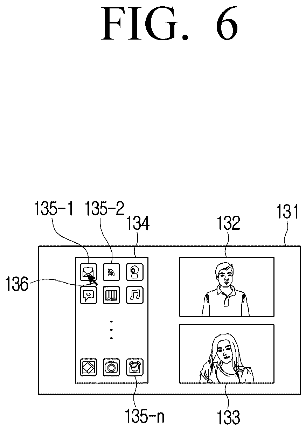

FIGS. 4 to 5 illustrate a method of selecting an object by moving an indicator such as a highlight indicator; however, when the display 130 of the terminal apparatus 100 supports a touch input, the user may directly touch the third area 134 to attempt control, or may use an input device such as a remote controller. FIG. 6 illustrates a case of using a manipulation cursor 136 which moves in accordance with the movement of an input device such as a remote controller.

Referring to FIG. 6, the processor 120 may display the cursor 136 within the video call screen. The user may move the cursor 136 using an input device and directly select the desired area (132, 133, 134) and objects (135-1 to 135-n).

For example, by using a remote controller, which is one of the devices capable of a movement manipulation, the user may move the cursor 136 on an object (for example, 135-1) on the screen of the external apparatus, and then press a button on the remote controller to select the corresponding object. When the display 130 is implemented as a touch screen, the user may directly touch the object.

When implemented as shown in FIG. 6, the processor 120 may identify a coordinate value within the actual screen corresponding to a coordinate value of a point directly touched or selected by a user, by considering the size of the scaled third area 134 and the size of the actual screen of the external apparatus 300. For example, assuming a threefold magnification scaling, when the coordinate value of the point directly touched or selected by the user is (3x, 3y), the processor 120 may recognize that the point (x, y) on the actual screen of the external apparatus 300 has been touched or selected. Accordingly, the processor 120 may generate a control signal including information about the recognized coordinate value. If information about the layout positions and types of each object in the external apparatus 300 is received and stored in the memory 140, the processor 120 may, based on the information and the recognized coordinate value, directly generate and transmit a control signal to perform an operation corresponding to the corresponding object.

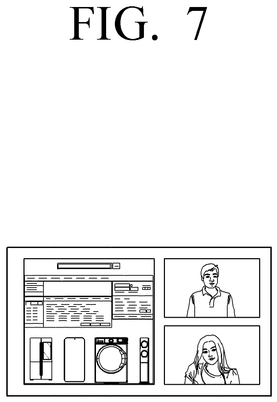

FIG. 7 is a view provided to explain a user manipulation of a terminal apparatus according to an embodiment.

FIG. 7 illustrates a case in which the external apparatus 300 is a device such as a desktop or a laptop rather than a mobile phone. Even in such a case, all of the features described above with reference to FIGS. 4 to 6 can be applied. For example, when the external apparatus performing mirroring communication with the correspondent device 200 is a laptop, the user 1 may obtain control authority over the display screen of the laptop and control the display.

The above description assumes a case in which the terminal apparatus and the correspondent device perform a one-to-one video call, but a multiparty video call function or a video conference function may also be performed. In this case, from the perspective of the terminal apparatus 100, there may be multiple correspondent devices.

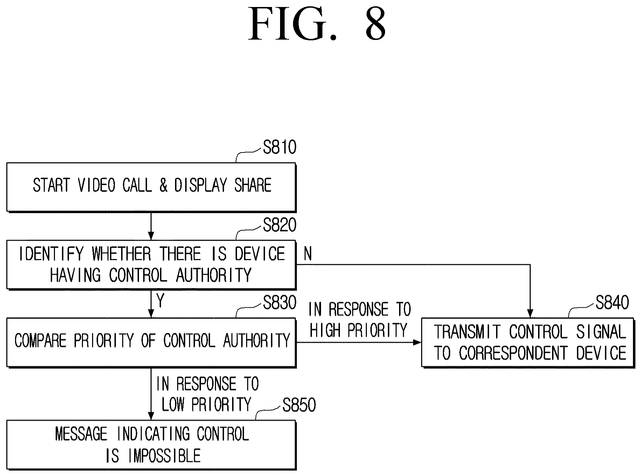

FIG. 8 is a flowchart provided to explain an example of a terminal apparatus operation in a state in which a plurality of apparatuses are connected.

When there are a plurality of correspondent devices, at least one of the plurality of correspondent devices may perform mirroring with the external apparatus. For example, assuming that one correspondent device 200 performs mirroring with the external apparatus 300, the remaining correspondent devices and the terminal apparatus 100 may attempt to obtain control authority.

FIG. 8 illustrates a process of assigning priority of control authority in such a case.

The processor 120, while performing a video call with a plurality of correspondent devices 200, when at least one of the plurality of correspondent devices is connected to the external apparatus 300 and performs mirroring communication, controls the display 130 to display a video call screen including at least one of the screens of users of each correspondent device and the external apparatus screen (S810).

In this state, when the user inputs a user manipulation for controlling the external apparatus, the processor 120 identifies whether there is a correspondent device having control authority among the remaining correspondent devices (S820).

When there is no device having control authority, the processor 120 may control the external apparatus by transmitting a control signal to the correspondent device according to a user manipulation, as described in the above embodiments (S840).

On the other hand, when there is a specific device having control authority to control the external apparatus 300, the processor 120 compares the control priority between the specific apparatus and the terminal apparatus 100 (S830). Information about the priority of the terminal apparatus 100 may be previously stored in the memory 140. The priority may be preset and stored according to various criteria such as types or positions of each terminal apparatus or relationships among users. Alternatively, the priority may be adaptively determined for each call according to other criteria, such as the order of participation in the video call or the number of participations. Alternatively, the priority may be determined through agreement among users of each terminal apparatus.

As a result of comparing the priorities, when the priority of the terminal apparatus 100 is higher than the priority of the specific device, the user 1 obtains control authority to control the display of the external apparatus 300 (S840).

On the other hand, as a result of comparing the priorities, when the priority of the terminal apparatus 100 is lower than the priority of the specific device, the processor 120 controls the display 140 to display a guide message indicating that control over the external apparatus 300 is not possible (S850).

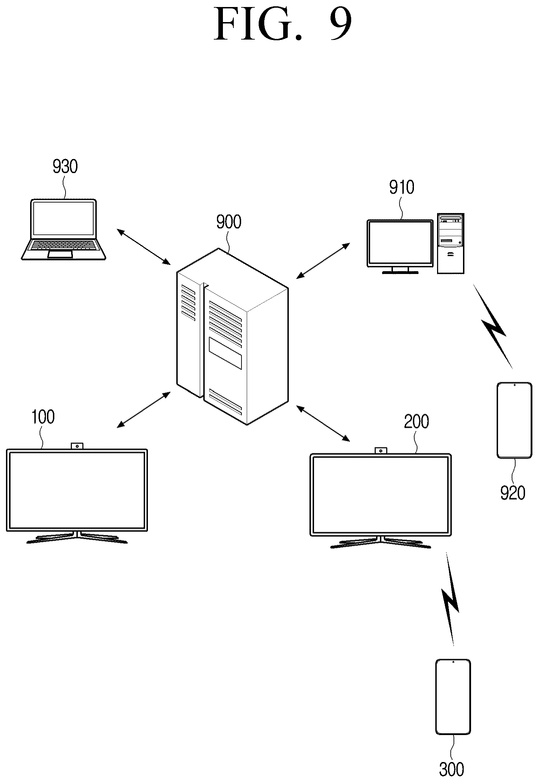

FIG. 9 is a view provided to explain a server device that controls an external apparatus according to an embodiment.

In the above-described various embodiments, although it is illustrated and described that direct connections between devices are established, communication among a plurality of devices may be relayed by a server device.

Hereinafter, a method of controlling an external apparatus through a server device will be described.

A server device 900 may be implemented as a central server (or integrated server) responsible for interactions among various operating systems and applications in any network system, or as a cloud server using cloud computing technology. Here, cloud computing refers to an Internet-based computing technology, which is a web-based software service in which a program is placed on a utility data server on the Internet and is called and used on a computer or a mobile phone as needed.

In addition, the server device 900 may perform communication with a plurality of terminal apparatuses. The plurality of terminal apparatuses may transmit identification information of the plurality of terminal apparatuses to the server device 900. Alternatively, the plurality of terminal apparatuses may transmit identification information of devices other than the plurality of terminal apparatuses, or transmit authentication information to access a user account, to the server device 900.

Referring to FIG. 9, the server device 900 is connected to a plurality of terminal apparatuses such as the terminal apparatus 100 of the user 1, the correspondent device 200 of the counterpart 2, a desktop 910, and a laptop 930. The devices that can be connected are not limited thereto, and various terminal apparatuses can be connected. When at least one of the plurality of terminal apparatuses performs mirroring communication with an external apparatus, each terminal apparatus may obtain control authority to control the display of the external apparatus. For example, when there exists an external apparatus 920 performing mirroring communication with at least one of the plurality of terminal apparatuses, such as the desktop 910, each terminal apparatus may obtain control authority to control the external apparatus 920.

As illustrated in FIG. 9, when the server device 900 is involved, each image included in the video call screen displayed on the terminal apparatus 100 and the correspondent device 200 may be generated based on data provided by the server device 900. The server device 900 may transmit images to be displayed in at least one of the first to third areas of the video call screen at once, or may transmit only some of the images. Alternatively, the server device 900 may configure the video call screen itself and provide data for the screen to the terminal apparatus and the correspondent device 100, 200, respectively.

For example, when the correspondent device 200 is not performing mirroring communication with the external apparatus 300, the server device 900 may receive the image of the correspondent device captured by the correspondent device 200 and transmit it to the terminal apparatus 100. Alternatively, when the correspondent device 200 is performing mirroring communication with the external apparatus 300, both the external apparatus screen and the correspondent device image may be transmitted to the terminal apparatus 100 either at once or sequentially.

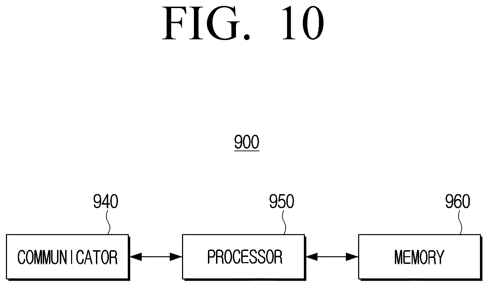

FIG. 10 is a block diagram illustrating configuration of a server device according to an embodiment.

Referring to FIG. 10, the server device includes a communicator 940, a processor 950, and memory 960 for performing communication with a plurality of terminal apparatuses.

The processor 950, when a video call involving the plurality of terminal apparatuses is performed, generates a video call screen including images provided from each terminal apparatus and transmits the video call screen to each terminal apparatus through the communicator 940. Subsequently, when at least one of the plurality of terminal apparatuses performs mirroring communication sharing the screen of an external apparatus, the processor 950 receives information about the display of the external apparatus from at least one terminal apparatus through the communicator 940 and stores the information in the memory 960. The processor 950 reconfigures the video call screen to additionally include the stored external apparatus screen and transmits the reconfigured video call screen to each terminal apparatus through the communicator 940.

The processor 950, when a user manipulation for controlling the external apparatus is transmitted from one of the plurality of terminal apparatuses, generates a control signal to cause the external apparatus to perform an operation corresponding to the user manipulation and transmits the control signal to the external apparatus and the terminal apparatus performing mirroring through the communicator 940.

Accordingly, a plurality of users may perform video calls and screen sharing with each other while controlling an external apparatus that is performing mirroring communication with the terminal apparatuses.

When there are a plurality of terminal apparatuses that transmitted a user manipulation to control the external apparatus, the processor 950 compares the priorities of each terminal apparatus based on information stored in the memory 960 regarding the priorities of the plurality of terminal apparatuses, and grants control authority over the external apparatus to the terminal apparatus having a higher priority.

The server device may include servers of various types, such as a Multipoint Control Unit (MCU) or a Selective Forwarding Unit (SFU). In the case of an MCU, multiple user images are mixed into one media stream using the server and transmitted as a single stream. This method can reduce traffic when exchanging data or images among multiple users. In the case of an SFU, similarly, each of the plurality of terminal apparatuses is individually connected to the server device, maintaining separate connections, and transmits and receives video call images or data with each other through the server. This method is suitable for large-scale connections, and allows individual layout adjustment for each terminal apparatus since each terminal apparatus is connected to the server device.

Regarding the connection method of a terminal apparatus controlling an external apparatus, there are direct connection methods such as Peer to Peer (P2P) and the MCU and SFU methods as described above, and various embodiments of the present disclosure may be applied to any of these methods.

Meanwhile, when the terminal apparatus 100 obtains control authority to control the external apparatus 300, allowing control of the display of the external apparatus 300, there is a risk of security issues regarding the external apparatus 300 of the counterpart 2. For example, when the external apparatus 300 is a mobile device, various data and information such as photos, emails, and messenger contents stored in the mobile device may be leaked. Even if the counterpart 2 allows control over his or her mobile device, the counterpart 2 may not consider the risk of personal data leakage, and thus prevention may be necessary.

Accordingly, to address security issues of a terminal apparatus controlling an external apparatus, the following description assumes that the external apparatus 300 is a mobile device.

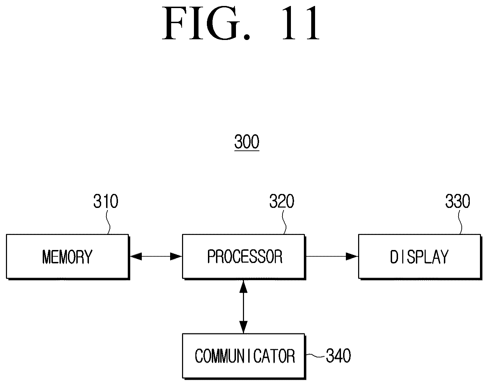

FIG. 11 is a block diagram illustrating configuration of a mobile device according to an embodiment.

Referring to FIG. 11, a mobile device includes memory 310 in which data and applications are stored, a processor 320, a display 330, and a communicator 340.

When mirroring communication is performed for a second external apparatus engaging in a video call with a first external apparatus, the processor 320 provides the screen of the display 330 to the second external apparatus. In this state, if control authority over the mobile device 300 is granted to the first external apparatus, the processor 320 allows only limited control by the first external apparatus. In other words, the processor 320 allows control operations according to a user manipulation input directly through a touch screen or other user interface provided in the mobile device itself without limitation, but only after user authentication (such as fingerprint recognition, password input, pattern input, facial recognition, etc.). Accordingly, the user can freely use various data and applications stored in the mobile device.

However, when control authority is granted to a first external apparatus that is engaged in a video call with a second external apparatus performing mirroring communication, if a control signal transmitted from the first external apparatus is received through the second external apparatus, the processor 320 may not allow control over some data or applications.

Specifically, with respect to data and application that have a security level equal to or lower than a preset criterion, the processor 320 may allow control by the first external apparatus based on memory where information about data and applications is stored.

When a control signal of the first external apparatus for data and applications exceeding a preset criterion is received, the processor 320 provides a message indicating that control is not possible to the first external apparatus through the second external apparatus.

The security level may be set as default depending on the type of data or application, or may be set by the user. For example, high security levels may be set for data such as photos, video content, contact information, message transmission and reception content, and for applications such as social networking services (SNS), stock trading, financial-related apps, and email sending and receiving programs. Meanwhile, regarding security issues related to personal information, various types of data, and applications, access may be permitted only to specific persons or specific accounts mutually authorized by the user 1 or the counterpart 2 through a user registration process, or registration and access may be allowed through a key authentication method at the time of user registration. When a control signal for executing data or applications having a security level for which access is permitted is input, the processor 320 may control the display 330 to display a screen for viewing the data or to execute the selected application and display its execution screen. On the other hand, when a control signal for executing data or applications having a security level for which access is not permitted is input, the processor 320 may transmit a message indicating that the data or applications cannot be controlled to the terminal apparatus 100 through the correspondent device 200.

The method relating to the security of an external device is not limited to the above description, and security issues may be addressed in various ways.

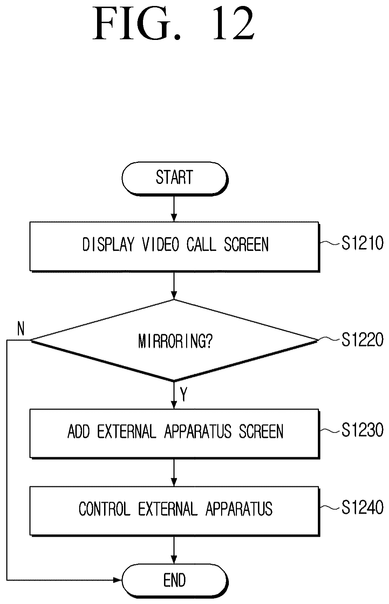

FIG. 12 is a flowchart provided to explain a method of controlling a terminal apparatus according to an embodiment.

Referring to FIG. 12, when a video call between the terminal apparatus 100 and the correspondent device 200 is performed, a video call screen including an image received from the correspondent device 200 is displayed on the display 130 of the terminal apparatus 100 (S1210).

When the correspondent device 200 performs mirroring communication sharing the screen of an external apparatus (S1220), information about the screen of the external apparatus is received by the terminal apparatus 100 through the correspondent device 200 and additionally displayed on the video call screen of the display 130 of the terminal apparatus (S1230).

Subsequently, when the user 1 inputs a user manipulation for controlling the external apparatus through the terminal apparatus 100, a control signal corresponding to the user manipulation is generated, and the control signal is transmitted to the correspondent device 200 to control the external apparatus, such that the correspondent device transmits the control signal to the external apparatus (S1240). According to this, the user can explain how to use the external apparatus to the counterpart, directly control the external apparatus on behalf of the counterpart to play the content of the external apparatus, or perform emergency contact operations to care for the counterpart. The method for the user to obtain control authority has been described in detail above, so redundant explanation will be omitted.

Meanwhile, when there are a plurality of correspondent devices, if a user manipulation for controlling the external apparatus is input while at least one of the plurality of correspondent devices is connected to the external apparatus and performing mirroring operation, it is identified whether there is a device among the plurality of correspondent devices that has control authority over the external apparatus. When there is no specific device having control authority over the external apparatus, or when the priority of the terminal apparatus 100 is higher than the priority of the specific device, a control signal is generated and transmitted to the correspondent device connected to the external apparatus.

Subsequently, when the priority of the specific device having control authority is higher than the priority of the terminal apparatus 100, a guide message indicating that control of the external apparatus is not possible is displayed. Since the step of displaying a notification message has been described in detail above, redundant explanation will be omitted.

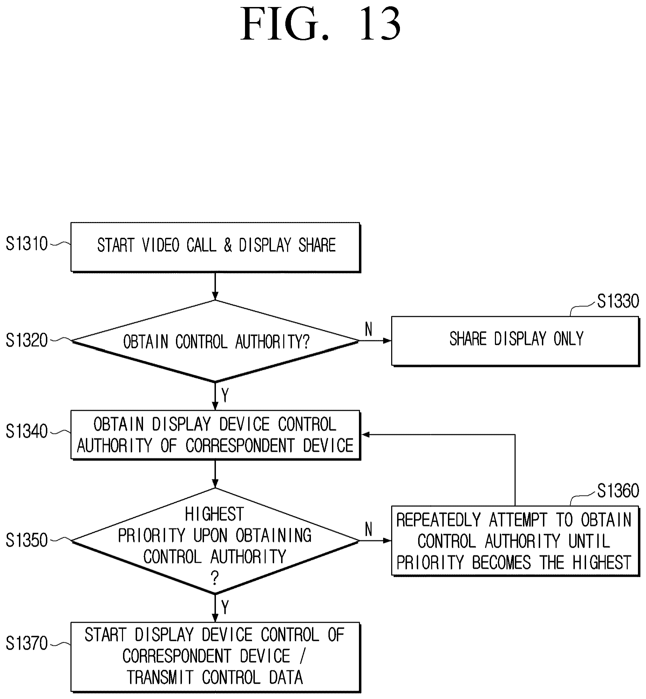

FIG. 13 is a flowchart provided to explain an example of a method of controlling an apparatus in a state in which a plurality of apparatuses are connected with each other.

Referring to FIG. 13, the terminal apparatus may perform a video call with a plurality of correspondent devices, and may obtain control authority based on the priority of each device.

When a video call is initiated with a plurality of correspondent devices, the terminal apparatus 100 may share the screen of each device (S1310).

In this state, when at least one of the plurality of correspondent devices is connected to an external apparatus and performs mirroring operation, the terminal apparatus 100 may additionally display the mirrored screen of the external apparatus on the video call screen.

In this state, when the user of the terminal apparatus 100 inputs a user manipulation to control the external apparatus mirrored on the correspondent device (S1320), the terminal apparatus 100 performs an operation to obtain control authority (S1340). The process of obtaining control authority has been described in detail above, so redundant explanation will be omitted.

When the terminal apparatus 100 does not have control authority to control the external apparatus, only the display is shared (S1330). On the other hand, when the terminal apparatus 100 has control authority to control the external apparatus, the terminal apparatus 100 obtains the control authority to control the display of the external apparatus (S1340).

However, when there are a plurality of correspondent devices including the terminal apparatus 100, a highest priority for obtaining control authority is required (S1350). When the terminal apparatus 100, among the plurality of devices, does not have the highest priority to obtain control authority compared to other correspondent devices, the terminal apparatus 100 retries requesting permission to control the external apparatus through the correspondent device performing mirroring communication with the external apparatus until it becomes the highest priority (S1360). Meanwhile, when the terminal apparatus 100 has the highest priority for obtaining control authority, the terminal apparatus 100 may control the display of the external apparatus and transmit control data (S1370). Even if the terminal apparatus 100 does not have the highest priority, when the priority thereof is higher than those of other devices requesting control authority, the terminal apparats 100 may obtain the control authority.

Meanwhile, the step of additionally displaying on the video call screen of the display 130 of the terminal apparatus includes displaying an image captured by the camera 10 of the terminal apparatus 100 in a first area within the video call screen, displaying an received from the correspondent device in a second area within the video call screen, and displaying the screen of the external apparatus in a third area within the video call screen.

Also, the step of transmitting a control signal to the correspondent device includes adding a highlight indicator to one of the first to third areas. When a movement manipulation to move the highlight indicator is input, the highlight indicator is moved to another area according to the movement manipulation. Subsequently, when a user selection is input while the highlight indicator is added to the third area, it is recognized that a user manipulation to control the external apparatus is input.

Meanwhile, the step of transmitting a control signal to the correspondent device includes, when a user selection is input while the highlight indicator is added to the third area, adding and displaying a highlight indicator to one of a plurality of objects included in the screen of the external apparatus, and when a movement manipulation is input, moving the highlight indicator to another object among the plurality of objects.

Subsequently, when a user selection is input while the highlight indicator is added to one of the plurality of objects, a control signal to perform an operation corresponding to the object to which the highlight indicator is added is generated, and the generated control signal is transmitted to the correspondent device.

Meanwhile, the various embodiments described above may be applied to a product individually, or at least some of the features may be combined and implemented together with other embodiments of the present disclosure.

The present disclosure relates to a terminal apparatus that controls an external apparatus and a controlling method thereof. When there are a terminal apparatus and a plurality of correspondent devices, and video calls and screen sharing are performed among them, the terminal apparatus may control the display of the external apparatus that performs mirroring communication with at least one correspondent device, which is an effect of the present disclosure. In other words, it is possible not only to control a counterpart device located at a remote distance, but also to control another external apparatus that is performing mirroring communication with the counterpart device.

Meanwhile, the methods according to the various embodiments described above may be implemented in the form of program code for performing each step, stored in a recording medium, and distributed. In this case, a device equipped with the recording medium may perform the controlling method of the terminal apparatus that controls the external apparatus as described above.

Such a recording medium may be a computer-readable medium of various types, such as a ROM, a RAM, a memory chip, a memory card, an external hard disk, a hard disk, a CD, a DVD, a magnetic disk, or a magnetic tape.

shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. A terminal apparatus comprising:
a communicator;
a display; and
a processor,
wherein the processor is configured to:
control the display to display a video call screen with a correspondent device that performs a mirroring operation for sharing a screen of an external apparatus; and
based on a user manipulation for controlling the external apparatus being input, generate a control signal for the external apparatus, and transmit the control signal to the correspondent device through the communicator such that the correspondent device transmits the control signal to the external apparatus.

2. The terminal apparatus as claimed in claim 1, further comprising:
memory for storing an image of the correspondent device and data for a screen of the external apparatus,
wherein the processor is configured to:
compose the video call screen including an image of the correspondent device and a screen of the external apparatus, and control the display to display the composed video call screen; and
based on a user manipulation for controlling the external apparatus being input, control the correspondent device to display a message inquiring whether to permit control of the external apparatus, and based on a response indicating permission to control of the external apparatus being received, generate the control signal.

3. The terminal apparatus as claimed in claim 1, wherein the processor is configured to:
based on the correspondent device being a plurality of apparatuses, and a user manipulation for controlling the external apparatus being input while at least one of the plurality of correspondent devices is connected to an external apparatus and is performing the mirroring operation, identify whether there is a device having control authority over the external apparatus, and based on there being no device having the control authority or a priority of the terminal apparatus being higher than a device having the control authority, generate the control signal and transmit the generated control signal to a correspondent device to which the external apparatus is connected; and
based on a priority of a device having the control authority being higher than a priority of the terminal apparatus, control the display to display a notification message indicating that control of the external apparatus is impossible.

4. The terminal apparatus as claimed in claim 1, further comprising:
a camera,
wherein the processor is configured to:
transmit an image captured by the camera to an external server through the communicator;
receive, from the external server, data for a video call screen including all of an image captured by the camera, an image captured by the correspondent device, and a screen of the external apparatus, and control the display to display the video call screen based on the data; and
based on a user manipulation for controlling the external apparatus being input on the video call screen, generate a control signal corresponding to the user manipulation, and transmit the control signal to the correspondent device through the communicator.

5. The terminal apparatus as claimed in claim 2, further comprising:
a camera,
wherein the processor is configured to:
based on layout information stored in the memory, display an image captured by the camera in a first area within the video call screen, display an image received from the correspondent device in a second area within the video call screen, and display a screen of the external apparatus in a third area within the video call screen;
add and display a highlight indicator in one of the first to third areas, and based on a movement manipulation for moving the highlight indicator being input, move and display the highlight indicator in another area according to the movement manipulation; and
based on a user selection being input while the highlight indicator is added in the third area, recognize that a user manipulation for controlling the external apparatus is input.

6. The terminal apparatus as claimed in claim 5, wherein based on a screen of the external apparatus including a plurality of objects, the processor is configured to:
based on the user selection being input while the highlight indicator is added in the third area, add and display the highlight indicator in one of the plurality of objects, and based on the movement manipulation being input, move and display the highlight indicator in another object among the plurality of objects; and
based on the user selection being input while the highlight indicator is added in one of the plurality of objects, generate a control signal for performing an operation corresponding to the object where the highlight indicator is added, and transmit the control signal to the correspondent device through the communicator to transmit the control signal to the external apparatus.

7. A mobile device comprising:
a communicator configured to perform communication with an external apparatus;
a display; and
a processor,
wherein the processor is configured to:
based on a mirroring function for a second external apparatus that is performing a video call with a first external apparatus being performed, provide a screen of the display to the second external apparatus through the communicator; and
based on control authority over the user terminal apparatus being granted to the first external apparatus, permit control by the first external apparatus in a limited manner.

8. The mobile device as claimed in claim 7, further comprising:
memory storing data and applications,
wherein the processor is configured to:
permit control by the first external apparatus based on the stored memory with respect to data and an application having a security level equal to or less than a preset standard among the data and the applications; and
based on a control signal of the first external apparatus for the data and an application having the security level exceeding the standard being received, provide a message indicating that control is impossible to the first external apparatus through the second external apparatus.

9. A server device comprising:
a communicator configured to perform communication with a plurality of terminal apparatuses;
memory; and
a processor,
wherein the processor is configured to:
based on a video call being performed among the plurality of terminal apparatuses, generate a video call screen including an image provided by each terminal apparatus and transmit the video call screen to each terminal apparatus through the communicator;
based on a mirroring operation for sharing a screen of an external apparatus being performed in at least one terminal apparatus among the plurality of terminal apparatuses, receive information about a screen of the external apparatus from the at least one terminal apparatus through the communicator and store the information in the memory, reconfigure the video call screen to add the stored screen of the external apparatus, and transmit the reconfigured video call screen to each terminal apparatus through the communicator; and
based on a user manipulation for controlling the external apparatus being transmitted from one of the plurality of terminal apparatuses, generate a control signal for performing an operation corresponding to the user manipulation by the external apparatus, and transmit the control signal to a terminal apparatus that is mirrored with the external apparatus through the communicator.

10. The server device as claimed in claim 9, wherein the memory stores information about a priority of each of the plurality of terminal apparatuses; and
wherein the processor is configured to:
based on there being a plurality of terminal apparatuses that transmitted a user manipulation for controlling the external apparatus, compare a priority of each terminal apparatus based on information stored in the memory, and grant control authority over the external apparatus to a terminal apparatus having the highest priority.

11. A method of controlling a terminal apparatus, the method comprising:
displaying a video call screen with a correspondent device that performs a mirroring operation for sharing a screen of an external apparatus; and
based on a user manipulation for controlling the external apparatus being input, generating a control signal corresponding to the user manipulation, and transmitting the control signal to the correspondent device such that the correspondent device transmits the control signal to the external apparatus.

12. The method as claimed in claim 11, further comprising:
based on the correspondent device being a plurality of apparatuses, and a user manipulation for controlling the external apparatus being input while at least one of the plurality of correspondent devices is connected to an external apparatus and is performing the mirroring operation, identifying whether there is a device having control authority over the external apparatus among the plurality of correspondent devices, and based on there being no device having the control authority or a priority of the terminal apparatus being higher than a device having the control authority, generating the control signal and transmitting the generated control signal to a correspondent device to which the external apparatus is connected; and
based on a priority of a device having the control authority being higher than a priority of the terminal apparatus, displaying a notification message indicating that control of the external apparatus is impossible.

13. The method as claimed in claim 11, wherein the displaying the video call screen comprises:
displaying an image captured by a camera of the terminal apparatus in a first area within the video call screen, displaying an image received from the correspondent device in a second area within the video call screen, and displaying a screen of the external apparatus in a third area within the video call screen;
wherein the transmitting the control signal to the correspondent device comprises:
adding and displaying a highlight indicator in one of the first to third areas;
based on a movement manipulation for moving the highlight indicator being input, moving and displaying the highlight indicator in another area according to the movement manipulation; and
based on a user selection being input while the highlight indicator is added in the third area, recognizing that a user manipulation for controlling the external apparatus is input.

14. The method as claimed in claim 13, wherein the transmitting the control signal to the correspondent device comprises:
based on the user selection being input while the highlight indicator is added in the third area, adding and displaying the highlight indicator in one of a plurality of objects included in a screen of the external apparatus;
based on the movement manipulation being input, moving and displaying the highlight indicator in another object among the plurality of objects; and
based on the user selection being input while the highlight indicator is added in one of the plurality of objects, generating a control signal for performing an operation corresponding to the object where the highlight indicator is added; and
transmitting the control signal to the correspondent device.

15. A computer-readable recording media storing a computer instruction that causes a terminal apparatus to perform an operation when executed by a processor of the terminal apparatus, the operation comprising:
displaying a video call screen with a correspondent device that performs a mirroring operation for sharing a screen of an external apparatus; and
based on a user manipulation for controlling the external apparatus being input, generating a control signal corresponding to the user manipulation, and transmitting the control signal to the correspondent device such that the correspondent device transmits the control signal to the external apparatus.
